(19) Europäisches Patentamt
European Patent Office
Office européen des brevets

(11) Publication number: 0 111 573 A1

# (12) EUROPEAN PATENT APPLICATION

(21) Application number: 82111594.6

(22) Date of filing: 14.12.82

(51) Int. Cl.³: C 01 B 3/04
C 25 B 1/04

(43) Date of publication of application:
27.06.84 Bulletin 84/26

(84) Designated Contracting States:
AT BE CH DE FR GB IT LI LU NL SE

(71) Applicant: Meyer, Stanley A.
3792 Broadway
Grove City Ohio 43123(US)

(72) Inventor: Meyer, Stanley A.
3792 Broadway
Grove City Ohio 43123(US)

(74) Representative: Wasmeier, Alfons, Dipl.-Ing. et al,
Postfach 382 Greflingerstrasse 7
D-8400 Regensburg(DE)

## (54) Hydrogen generator system.

(57) Process and apparatus for dissociating the hydrogen atoms of a water molecule by electrical force. Particularly, the separation of the hydrogen and oxygen atoms from the water molecule by the application of a non-regulated, non-filtered, low-power, direct current voltage electrical potential (30) applied to two non-oxidizing similar metal plates (60) having water passing therebetween. The direct current voltage may be continuous, but the sub-atomic action is enchanced by pulsing the non-regulated and non-filtered direct current voltage. The apparatus comprises constructional configurations and there is disclosed alternative embodiments for segregating the generated hydrogen gas from the oxygen gas. The water need not be pure and may contain contaminents. The release of the hydrogen (38) and oxygen (39) atoms causes the contaminents (41, 54, 32) to fall away, thereby enabling the system to be utilized in a liquid slurry removal system. Alternatively, the recombining of the hydrogen and oxygen would give pure water.

EP 0 111 573 A1

COMPLETE DOCUMENT



Croydon Printing Company Ltd.

FIG. 1

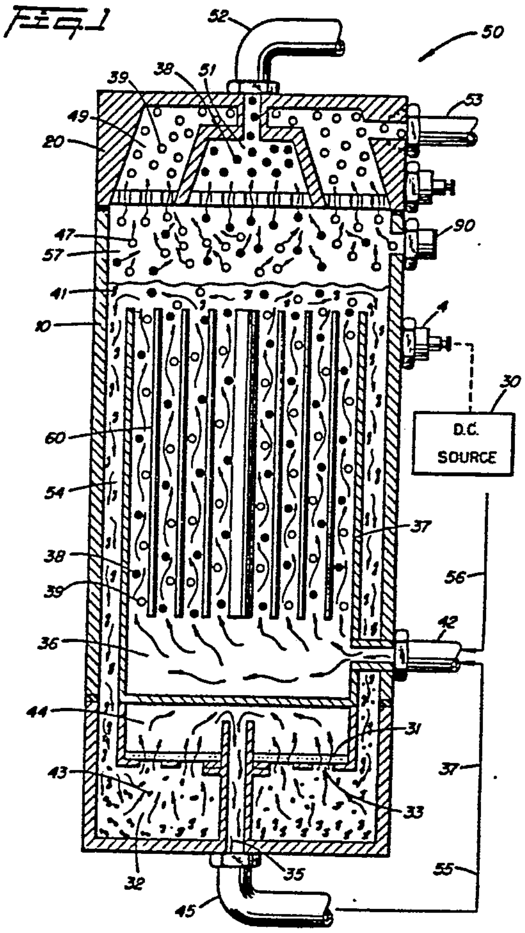

52
50
53
39
38
51
49
20
90
47
57
41
4
10
30
D.C. SOURCE
60
54
37
38
39
56
42
36
44
31
37
43
33
55
32
35
45

HYDROGEN GENERATOR SYSTEM

Process and apparatus for dissociating the hydrogen atoms of a water molecule by electrical force. Particularly, the separation of the hydrogen and oxygen atoms from the water molecule by the application of a non-regulated, non-filtered, low-power, direct current voltage electrical potential applied to two non-oxidizing similar metal plates having water passing therebetween. The direct current voltage may be continuous, but the sub-atomic action is enchanced by pulsing the non-regulated and non-filtered direct current voltage. The apparatus comprises constructional configurations and there is disclosed alternative embodiments for segregating the generated hydrogen gas from the oxygen gas. The water need not be pure and may contain contaminents. The release of the hydrogen and oxygen atoms causes the contaminents to fall away, thereby enabling the system to be utilized in a liquid slurry removal system. Alternatively, the recombining of the hydrogen and oxygen would give pure water.

*BACKGROUND*

The potential availability of hydrogen as a supplement to and eventually completely replace the present day available fuels is most appreciated. The efficiency of hydrogen as a fuel and its pollution free qualifies further enchances its attractiveness.

The prior art systems have been successful in splitting the hydrogen atoms from the oxygen. However, costs per Btu is most prohibitive and completely restricts the known process from commercialization.

The most commonly understood method of separating the hydrogen and oxygen atoms from water is electrolysis. This comprises placing a direct current voltage in a solution of water and potasium hydroxide. When current flows, an exchange of ions and electrons occurs between the electrodes. Hydrogen atoms collect at the negative electrode (cathode) and oxygen atoms at the positive electrode (anode). A separation between the electrodes separates the gases.

Significantly this process requires a chemical solution; that is, it does not process the hydrogen from pure water. Furthermore, the cost per million Btu is in the order of three times the cost of gasoline.

Other electrolysis processes have been devised and disclosed; but, again the more sophisticated, the complicated, complex and costly with the attendant unreliability.

Another process under study comprises nuclear energy to supply heat in a thermal of the hydrogen dissociation. The

problems with the process include the lack of container materials that can withstand temperatures of (3,700 degrees F) 2000°C and a practical method of attaining such temperatures. The addition of inorganic compounds to the water permits lower temperatures but again, adds to the complexity of the process.

A commercial method known as the Bosch process, consists in passing steam over highly heated carbon in the presence of a suitable catalyst. Carbon monoxide, CO, and hydrogen are first formed as shown in the following equation:

$$H_2O + C -- CO + H_2$$

The resulting carbon monoxide then reacts with more steam, forming carbon dioxide and hydrogen:

$$CO + H_2O -- CO_2 + H_2$$

The carbon dioxide is separated from the hydrogen by passing the mixture through water under pressure; the carbon dioxide dissolves in the water and leaves the hydrogen pure or nearly so.

Another process consists in the action of steam on methane, $CH_4$. The equations for the reactions that take place are:

$$CH_4 + H2O -- CO + 3H_2$$

$$CO + H_2O -- CO_2 + H_2$$

The resulting carbon dioxide and hydrogen are separated as in Bosch process. In a similar way, hydrogen may be obtained from other hydrocarbons.

Hydrogen is also obtained as a by-product from processes designed to prepare other substances, for example, in the preparation of chlorine by electrolysis of sodium chloride solution:

$2\ (Na^{+}\ (aq),\ Cl^{-}\ (aq)) + 2H_2O \ \text{--}\ 2(Na^{+}(aq),\ OH^{-}\ (aq)) +$

$H_2 + Cl_2$ and other important processes. The symbol (aq) tells us that the substances are present in water (aqueos) solutions.

Finally, there is the nature way of attaining hydrogen by photosynthesis. At best the process is still in the laboratory small-scale stage and those in the art acknowledges the process can produce hydrogen with an efficiency of only 37%.

It is generally understood among scientists that all forms of hydrogen production must be explored -- even if it is too costly, inefficient, or impractical. But, more significantly, hydrogen will be the fuel of the future. The only question remains how and when it will be produced.

Reference is made to the publication Cheaper Hydrogen. Popular Science, September 1981, pages 10 through 14, that reviews and updates the above-noted processes for disassociating the hydrogen atom.

*SUMMARY OF INVENTION*

The process of the present invention, unlike those of the prior art, is a simple, efficient, and low cost process for separating the hydrogen and oxygen atoms from water. No chemicals are added to the water and the electrical power utilized is only negligible.

In its most fundamental concept the water (may be pure, salt water, or contaminated water) is passed between two plates of similar non-oxidizing metal. The one plate has placed thereon a positive potential and the other a negative potential from a very low direct voltage/ current power source. The hydrogen atoms are separated and collected for utilization.

The contaminants in the water is forced also to dissociate itself and may be collected or utilized and disposed of. This in turn lends the process to recombining the hydrogen and oxygen into pure water.

The direct current voltage is non-regulated and non-filtered. Experimentation demonstrated that the direct current /voltage acts as a static force on the water molecules; whereas the rippling direct current /voltage acts as a dynamic force. Pulsating the direct current further acts as a dynamic force and enhances considerably the

splitting of the atoms from the water molecules.

The apparatus for carrying out the process is extremely simple and can be manufactured most inexpensively. Certain plate arrangements and configurations are disclosed with graphical illustration of relative efficiency. Alternative structure for separating and collecting the hydrogen from the oxygen is disclosed.

*OBJECTS*

It is accordingly a principal object of the present invention to provide method and means for a hydrogen/oxygen generator that is operable from any natural water source irrespective of its purity.

Another object of the present invention is to provide such a hydrogen/oxygen generator that is operable from every low electrical power, extremely efficient, and wherein the cost of operation ia most minimal.

Another object of the present invention is to provide a hydrogen/oxygen generator from water containing contaminents, and thereafter recombining the hydrogen/oxygen to form pure water.

Still another object of the present invention is to provide

a hydrogen/oxygen generator that utilized apparatus of simple and low cost materials, and which structure can be made in varying sizes, and duplicated without loss of efficiency.

Other objects and features of the present invention will become apparent from a reading of the detailed description of the preferred embodiment and it-s alternative structures when taken in conjunction with the drawings in which .

BRIEF DESCRIPTION OF DRAWINGS

Figure 1 is an illustration in cross-section of the operabl constructed preferred embodiment of the present invention.

Figure 2 illustrates the coaxial cluster or array of plates utilized in the embodiment of Figure 1.

Figure 3 is a first alternative plate arrangement, a concentric coaxial array.

Figure 4 is another alternative plate arrangement, the flat plate array.

Figure 5 illustrates the voltage potential as applied to several plates.

Figure 6 illustrates the principles of the present invention in its most simplified embodiment.

Figure 7 is thepreferred embodiment shown in Figure 1 except in this illustration, the view is perspective.

Figure 8 is a graphical illustration of applied power versus gas generated, and effect as to . condition of water.

Figure 9 is a graphical illustration of applied power versus gas generated, and increases in water temperatures.

Figure 10 is a graphical illustration of gas generator versus tube length in a tubular plate arrangement.

Figure 11 is a graphical illustration of applied power versus gas generated for pure water.

Figure 12 is a graphical illustration of gas generation for three different geometrical configurations of plate structure.

Figure 13 is a graphical illustration of gas generated with the plates having increasing separation, and

Figure 14 is a graphical illustration of electrical costs versus gas generated, and increases in Exciter Plate 5.

Figure 15 is a graphical illustration of different applied power versus gas generated, for various types of water conditions.

Figure 16 is a gas generated versus pulse direct current repitition rate.

DETAILED DESCRIPTION OF INVENTION AS DEPICTED IN DRAWINGS

With particular reference now to figure 6, there is illustrated schematically in cross-section the invention in its most simplified embodiment.

A structure 110 contains a water supply 15 comprising molecules 62a xxx 62n, of hydrogen 38a xxx 38n, oxygen, 39a xxx 39n, and foreign substances 64a xxx 64n. A pair of plates 9a and 9n consisting of non-oxydizing metal -- and both of the same metal, are submerged in the water 15.

Attached to terminal 32 on the first of the plates 9a is a wire having its other end connected to the negative terminal there is connected another wire having its other end connected to the positive terminal of the aforesaid direct current/voltage electrical source 30.

The direct current voltage applied to the water passing between plates 9a and 9b is sufficient to dissociate the hydrogen atom 39a x x x 39n and oxygen atoms 38a x x x 39n (appearing as bubbles) from the water molecules 62a xxx 62n. The forceful action of the applied potential attacks the molecule structure of the water and not its atomic structure, i.e., sub-atomic. The foreign substance or contaminents 64a xxx 64n is broken away from the water molecule 62a xxx 62n, and spills over the outside area of the plates 9a and 9b to a collector at the bottom of the tank 110.

The hydrogen gas 63a xxx 63n and oxygen gas 65a xxx 65n rises above the liquid. The gasses are separated, collected and thereafter utilized all as set forth below.

The process shown with the apparatus of Figure 6 is operable, as depicted schematically, in its most crude form. To increase and enchance the action, the process and the apparatus is improved upon as shown in the constructed and preferred embodiment of Figure 1 in cross-section and Figure 10 in perspective.

The voltage source 30 (shown schematically in Figure 5) supplies a direct current voltage that is rectified but not filtered and not regulated. That is, the direct current voltage is rippled and unregulated. The varying amplitude peeks, ripples, in terms of applied force acts as a constant static physical force.

The amount of electrical power required by the hydrogen/oxygen generator of the preferred embodiment, as illustrated, is surprisingly minimal. For the embodiment shown in Figures 2 and 10, the source 30 supplied 12 volts at 1 ampere to terminal 4.

It can be appreciated, that increasing the voltage would enhance the forceful sub-atomic action upon the water molecule. With reference to Figure 11, the voltage current versus gas generated is illustrated graphically. The gas generated is a linear function to magnitude of voltage applied. However, there is a serious limitation to increasing the voltage. As the voltage/current is increased the temperature of the water increases and eventually reaches a condition where steam is generated -- as

illustrated graphically in Figure 10 Further as shown graphically in Figure 9 the current versus gas generated is also a function of the type of water utilized.

Therefore, in lieu of increasing the electrical power to enchance the sub-atomic action on the water molecules, other conditions have been considered. The first is to alter the plate source direct current voltage waveform.

With particular reference to Figure 5 there is illustrated an electronic switch for switching on and off the rippled d.c output of supply 30. The ripple is not removed. The plates 32a x x x 32n are connected to a common ground 34. The positive terminals 33a x x x 33n are connected respectively to contacts 31a x x x 31n of switch 35 rotatively making and breaking contact with the direct-current voltage source 30.

In function the pulsed rippled output voltage forcefully applies to the water molecules a dynamic force, the pulse repitition rate versus the gas generated.

Other structured factors altering, affecting, and particularly enhancing the hydrogen gas generating comprises altering (1) plate size, (2) plate spacing, (3) number of plates, and (4) the plate configuration. Each of these factors have been taken into consideration in the development of a plate configuration to provide optimum results for a preferred embodiment.

With reference to Figure 2, there is shown an array or

cluster of tubular plates utilized in the preferred embodiment of Figures 1 and 7 The term "plate" hereinafter, is intended to convey a large area electrical surface; and whether the surface is flat, curved, tubular or otherwise, is of no consequence except as hereinafter defined. Particularly each tubular plate comprises an outside tube 32a x x x 32n, and an inside tube 33a x x x 33n. Connecting each of the center tubes 33a x x x 33n is a terminal wire 34; and connecting each of the outside tubes the through a common ground is a terminal wire 36. The two terminal wire 34 and 36 are connected to the positive and negative side respectively of the direct current voltage source 30. Intermediate the outside and inside tubes are a series of spacers 35a x x x 35n. The coaxial tubes in an array are shown pictorially in the perspective view of Figure 7 .

With particular reference to Figure 3 there is illustrated, as an alternative to that utilized in the preferred embodiment, another plate arrangement and configuration. This concentric ring array comprises a series of tubes each being co-axial with the other and of a size equally larger than its inner adjacent tube. The center tube 38a and the alternate tubes 38b and 38c serve as the positive plates connected to positive wire terminal 36. Each of the tubular plates 38a, 38b, and 38c are interconnected via connectors 8a and 8d to wire terminal 34. The three spacers 39a, 39b, and 39c maintain

a uniform spacing between the respective tubular plates.

With particular reference to Figure 4 there is shown still another plate arrangement and configuration. In this embodiment, shown in cross-section, the positive plates 9a x x x 9n are interconnected by electrode 12a whereas the negative plates 11a x x x 11n are interconnected by the electrode 12b.

With particular reference to 12 there is illustrated graphically the efficiency of the tubular plate array of Figure 2, the cluster tubular array of Figure 3, and the flat plate array of Figure 4. Specifically there is shown the gas generation versus the plate configuration. It can be appreciated from this graph why the embodiment of Figure 1 includes the cluster tubular array of Figure 2.

As stated above another factor affecting the gas generation output is the plate separation. With particular reference to Figure 13 there is illustrated graphically plate spacing versus gas generation. As can be seen the greater the spacing the less gas generation. The efficiency versus spacing of the plates is a linear decrease with spacing.

As stated above the applied direct current voltage across

the positive current voltage plates having water therebetween is a force applied -- in the nature of a physical force -- to the water molecules. The applied force is sufficient to cause the hydrogen and oxygen atoms to dissociate themselves from the water molecule and anything else that may be included therewith.

In the aforementioned prior art system of hydrogen gas generation such as the electrolysis process., it is essential that the water be distilled or otherwise made pure.

To determine the relative differences of the amount of gas generated versus the purity of the water, analysis was made of distilled water, rain water, city tap water, river water, well water untreated, well water treated, and sea water. The results of gas generation versus electrical power is illustrated in Figures 8 and 15 graphically for each of the waters tested.

It appears that water containing contaminents aids gas generation; however, the nature of the water contaminents appears to have no significance. The hydrogen atoms and oxygen atoms dissociate themselves from the water molecule. Anything else that may be included in the water is also bombarded loose and overflows the tank 37 and falls to the bottom 43.

Having now examined the applied electrical force phenomena, the physical configuration of the electrical plates, the power applied, and the condition of the water, reference is made specificially to the constructed function and operation constructed and operable preferred embodiment of the hydrogen gas generator of the present invention shown in cross-section in Figure 1 and in perspective in Figure 7.

The container 10 is a square elongated box configuration completely enclosing and sealing the components as hereinafter described.

Water, from which the hydrogen gas is to be taken, enters via inlet 42 to the chamber 36. The water is pumped or enters under normal pressure from a source via line 56. As mentioned above, the water need not be pure and hence may originate from any source. The water from source 42 enters chamber 36 which is a free area to an open top enclosure 37.

The water entering chamber 36 is caused to rise upwardly through the plates of the Cluster 60 previously described in more detail relative to Figure 2.

Applied to the inner tubular structures is a positive direct current voltage, and to the outer tubular structures of

the cluster array 60 is applied a negative direct current voltage. The direct current voltage is applied via terminals 4 connected to a suitable direct current voltage power source 30.

The hydrogen gas is depicted in Figure 1 as a solid circle 38 whereas the oxygen gas is depicted as the open circles 39.

The separated hydrogen and oxygen gas rises into the accumulator chamber 47.

Not all of the water molecules is broken up into its various atomic components. Thus, the unspent water 41 spills over the top of chamber 37 and drops down through outer chamber 54 and back to reservoir 43.

As aforesaid, it is not necessary to utilize pure water, the intake water will include several forms of contaminents. As best understood, when the water molecule is bombarded with the dynamic and static electrical force, the contaminents adhering to the water molecules are shaken loose and released therefrom. The contaminents, too, rise to the top of chamber 37 and form a part of the spillway 41. In that the containments do not contain hydrogen or oxygen, there will be no atomic breakup. The combination of water with contaminents drops down into ex-

traction chamber 43.

In the extraction chamber 43 most of the sediment or sludge will drop to the bottom of the chamber 32. The water with most of the sediment removed passes through the ports 33a xxx 33n, through charcoal filter 31, and into return water chamber 44. The uppermost portion of the water in chamber 44 drops into standpipe 35.

The water cleansed of substantially all contaminents exits via pipe 45 and then through line 55 and back to inlet pipe 42. The combined water from inlets 55 and 56 is again processed as aforesaid.

Patent Claims:

1. A system for the non-ionic release of hydrogen gas and oxygen gas from natural water, characterized by
a non oxydizing housing having a reservoir for retaining natural non-electrolytic water therein,
a pair of similar non-oxydizing plates positioned in said water,
a direct voltage/current source including means for connecting one of said plates to the negative terminal and the other of said plates to the positive terminal of said source,
said direct voltage/current potential on said plates causes a sub-atomic force-type action on said water, thereby disassociating the hydrogen atoms and oxygen atoms from the water molecules.

2. The system as set forth in claim 1, characterised in that said voltage/current potential is an unfiltered and non-regulated voltage and/or is pulsed.

3. The system as set forth in claim 2, characterized in that said pulsed direct voltage/current potential includes means to control the repetition rate thereof.

4. The system as set forth in claim 1, characterized in that said direct voltage/current potential includes means for varying the amplitude of said potential.

5. The system as set forth in claim 1, characterised in that said natural water contains contaminents and that said contaminents are released by said sub-at-omic force on the water molecules, and means for collecting said contaminents.

6. The system as set forth in claim 1, characterized in that said non-oxydizing plates have a flat or alternatively a nonplanar surface.

7. The system as set forth in claim 1, characterized in that said non-oxydizing plates are coaxial or alternatively have a concentric surface.

8. The system as set forth in claim 1, characterized in that said non-oxydizing plates are a plurality of plates in an array.

9. The system as set forth inclaim 1, characterized in that said non-oxydizing plates are a cluster of coaxial plates in an array.

10. The system as set forth in claim 1, characterized in that said positive and negative non-oxydizing plates are varied in spacing and/or in length and/or in surface area.

11. The system as set forth in claim 1, characterized in that said non-oxydizing housing further comprises a gas collection chamber for maintaining a preset volume of gas under pressure.

12. The system as set forth in claim 1, characterized in that the configuratinn of said plates is directly related to the forceful action of said direct current voltage potential on said water molecules.

13. The system as set forth in claim 8, characterized by switching means interconnected to each of said plates in said array and to said voltage source for switching in and out selected ones of said array of plates from said voltage source.

14. The process of non-ionic releasing hydrogen and oxygen gas from non-electrolytic water, characterized by
passing said non-electrolytic water through a contained area having a pair of non-oxydizing electrically conductive plates therein,
applying a direct current electric positive potential across one of said plates and applying a direct current electric negative potential across the other of said plates,

said electrical power potential applied to said plates being of sufficient magnitude to cause the positive atoms of the water molecule to be attracted to the negative potential on said plate and the negative atoms of the water molecule to be attracted to the positive potential on said plate, thereby forcing the hydrogen atoms and the oxygen atoms to disassociate themselves from the water molecule.

Fig.1

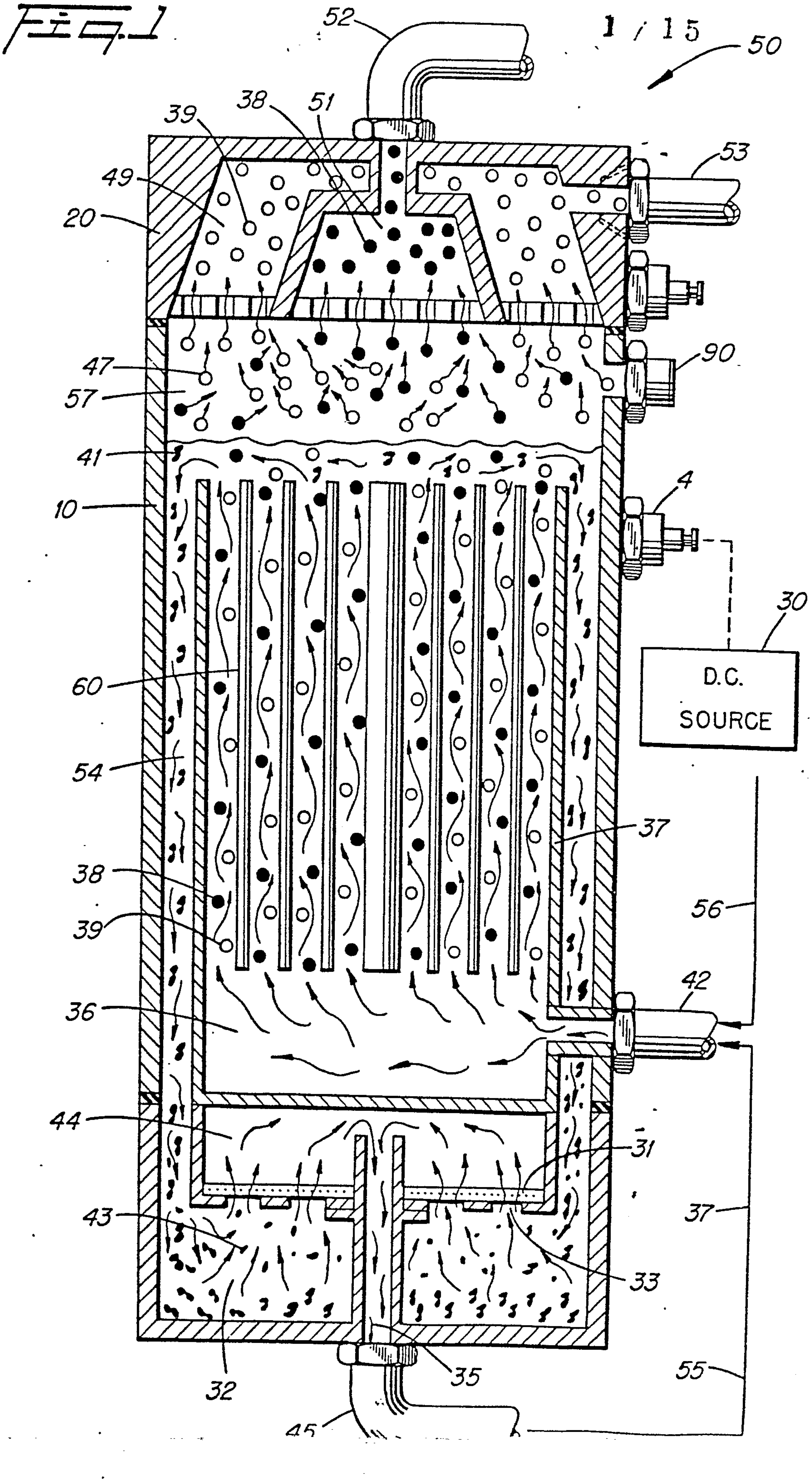
52
50
39
38
51
49
20
53
90
47
57
41
4
10
30
D.C.
SOURCE
60
54
37
38
39
56
36
42
44
31
43
37
33
32
35
55
45

Fig.2

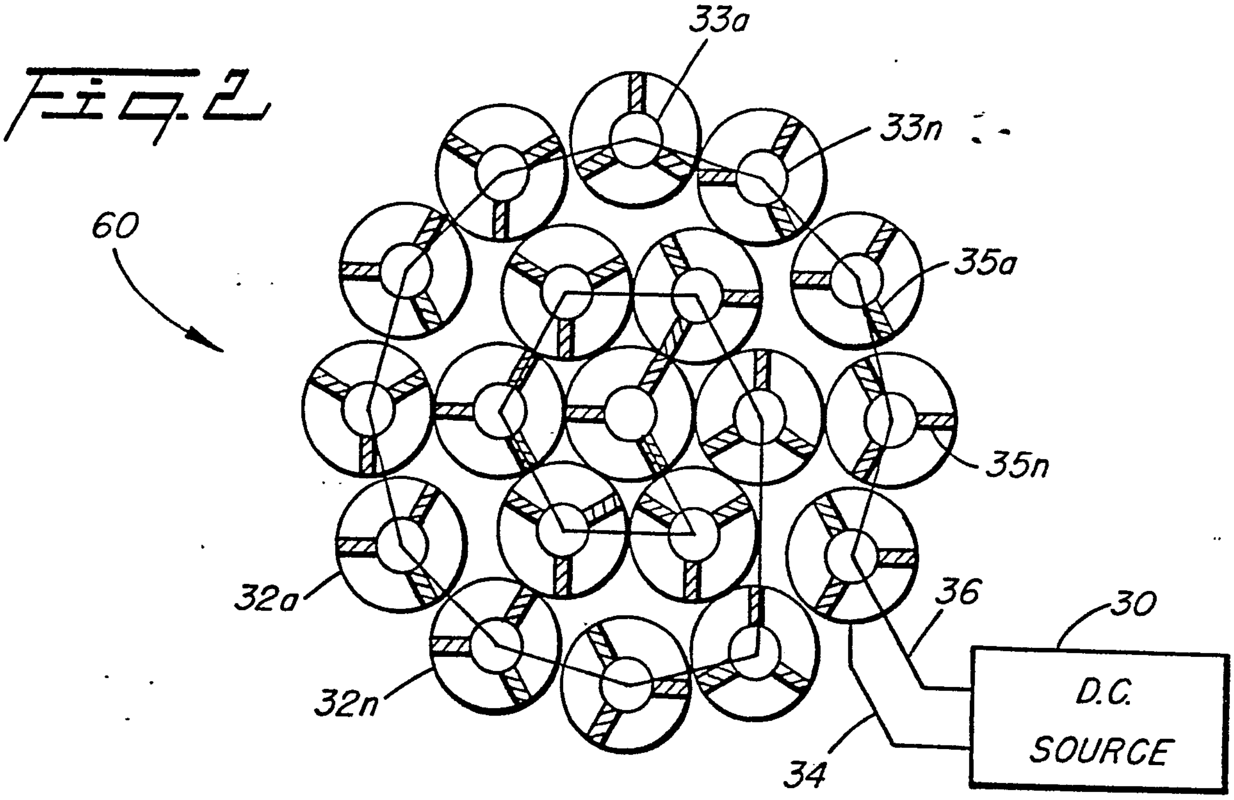
33a
33n
60
35a
35n
32a
32n
36
30
D.C.
SOURCE
34

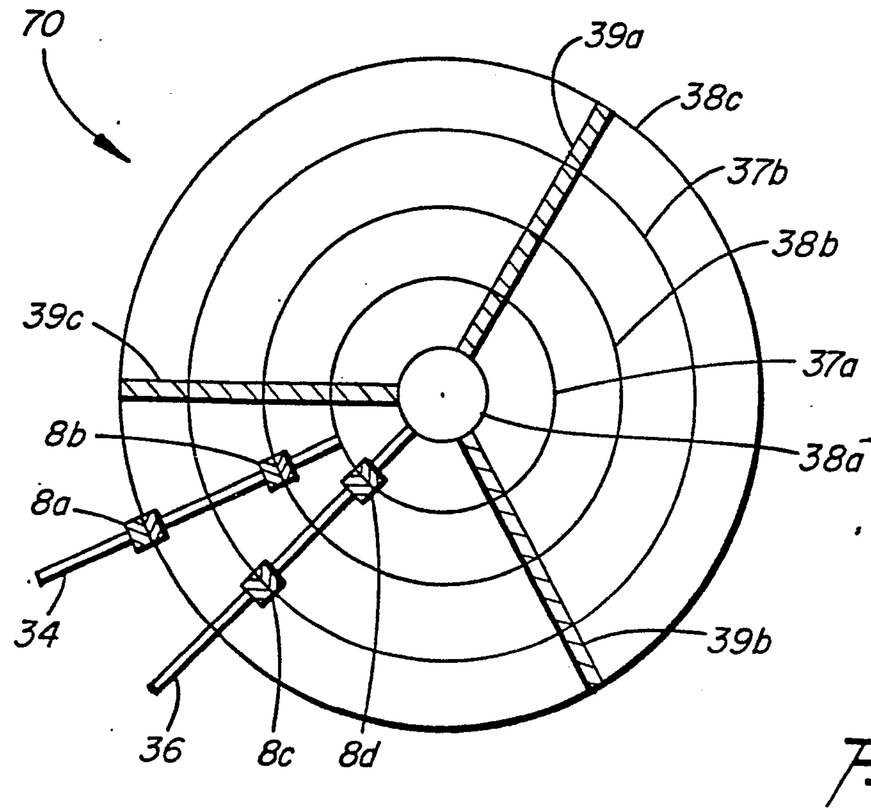
70
39a
38c
37b
38b
39c
37a
8b
38a
8a
34
39b
36
8c
8d

Fig.3

Fig. 4

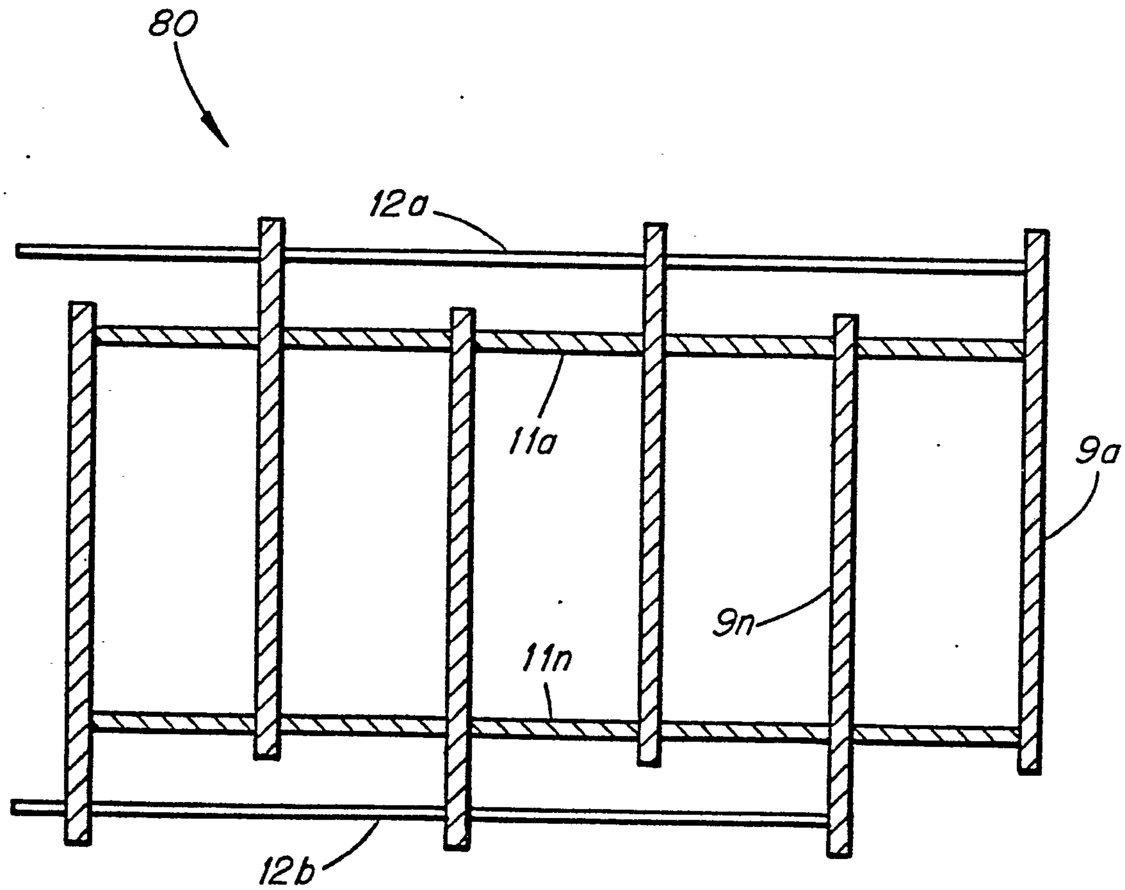

0111573

4 / 15

Fig. 5

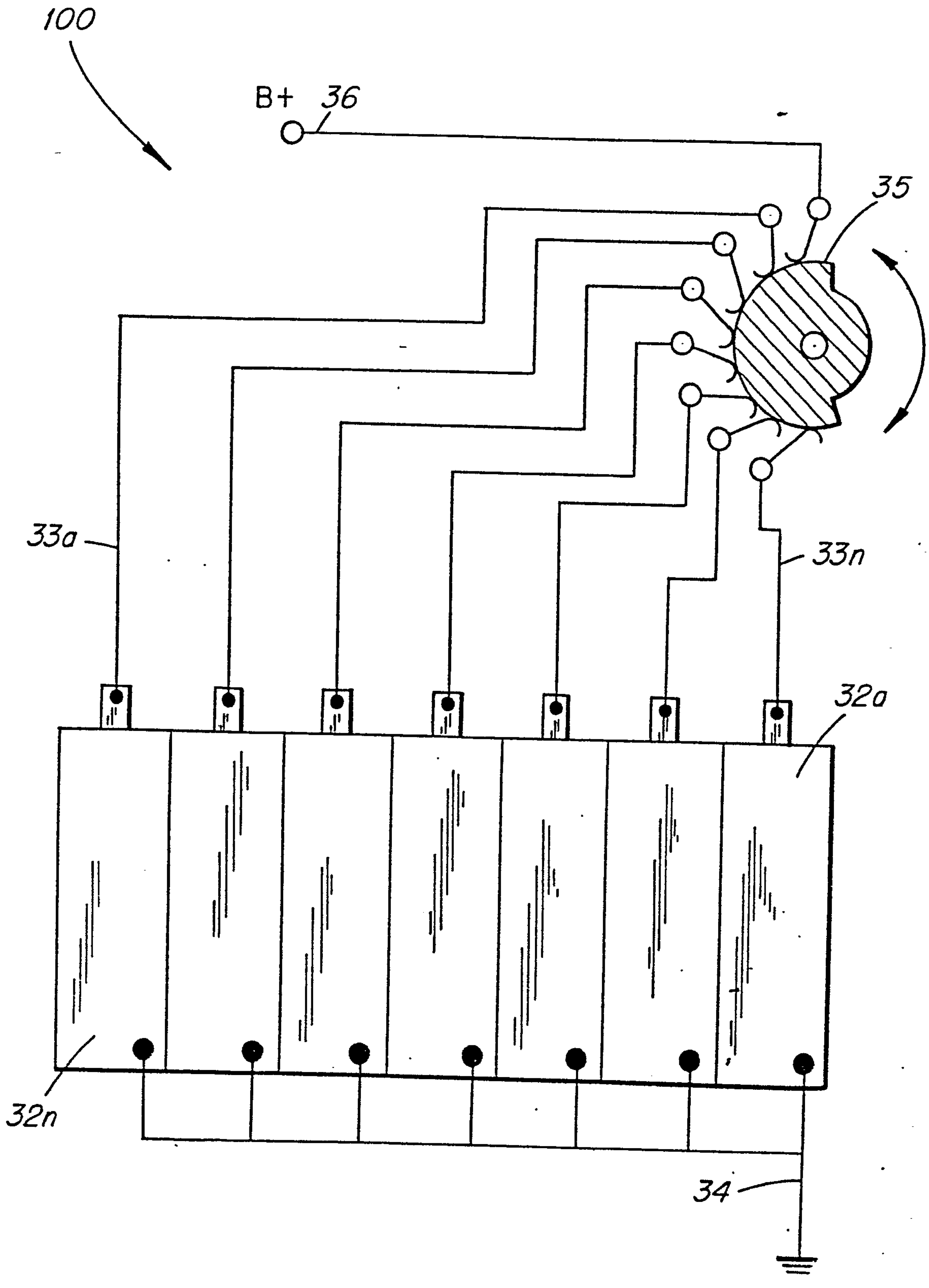

Fig. 6

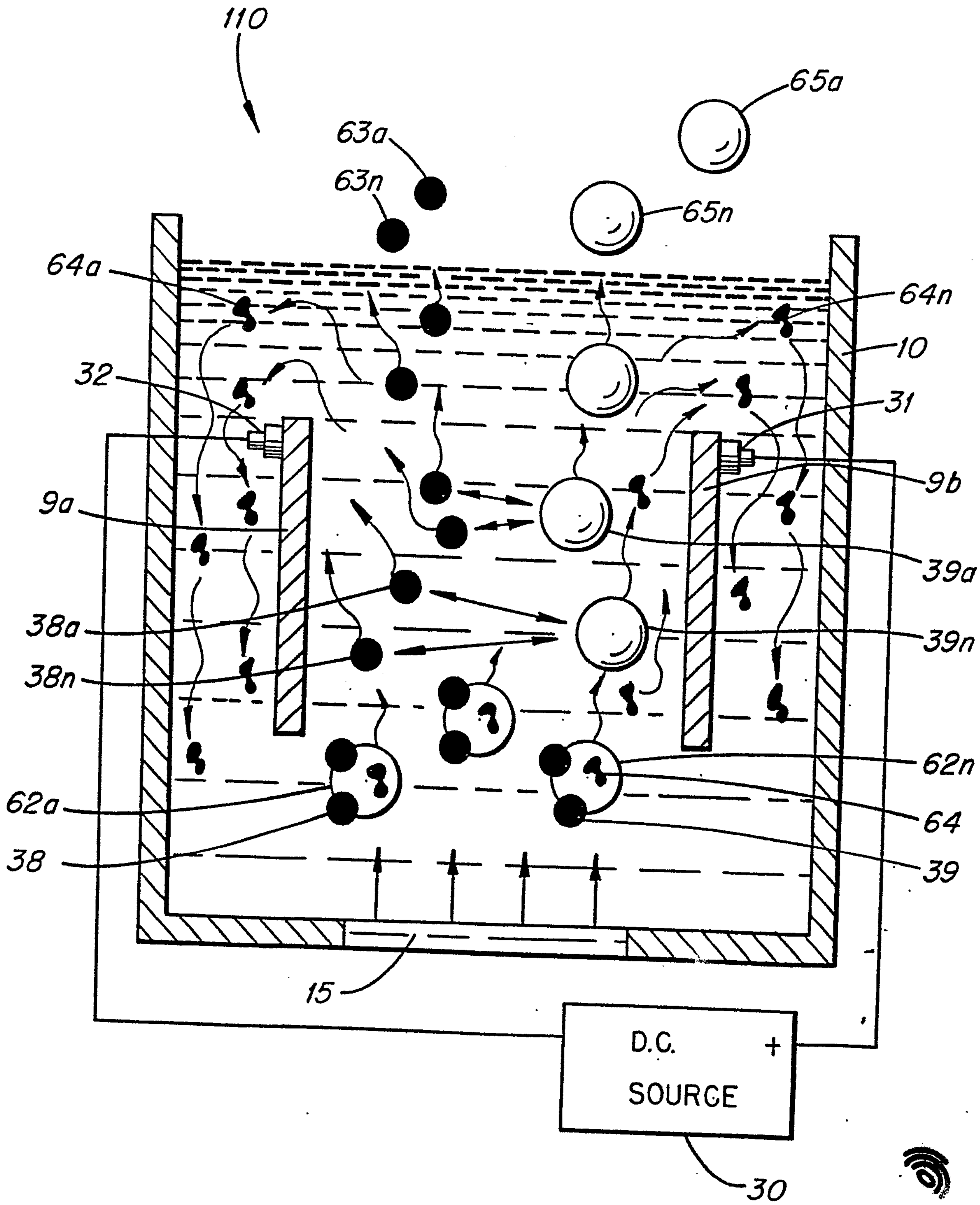
110
63a
63n
65a
65n
64a
64n
10
32
31
9a
9b
39a
38a
39n
38n
62n
62a
64
38
39
15
D.C.
+
SOURCE
30

FIG. 7

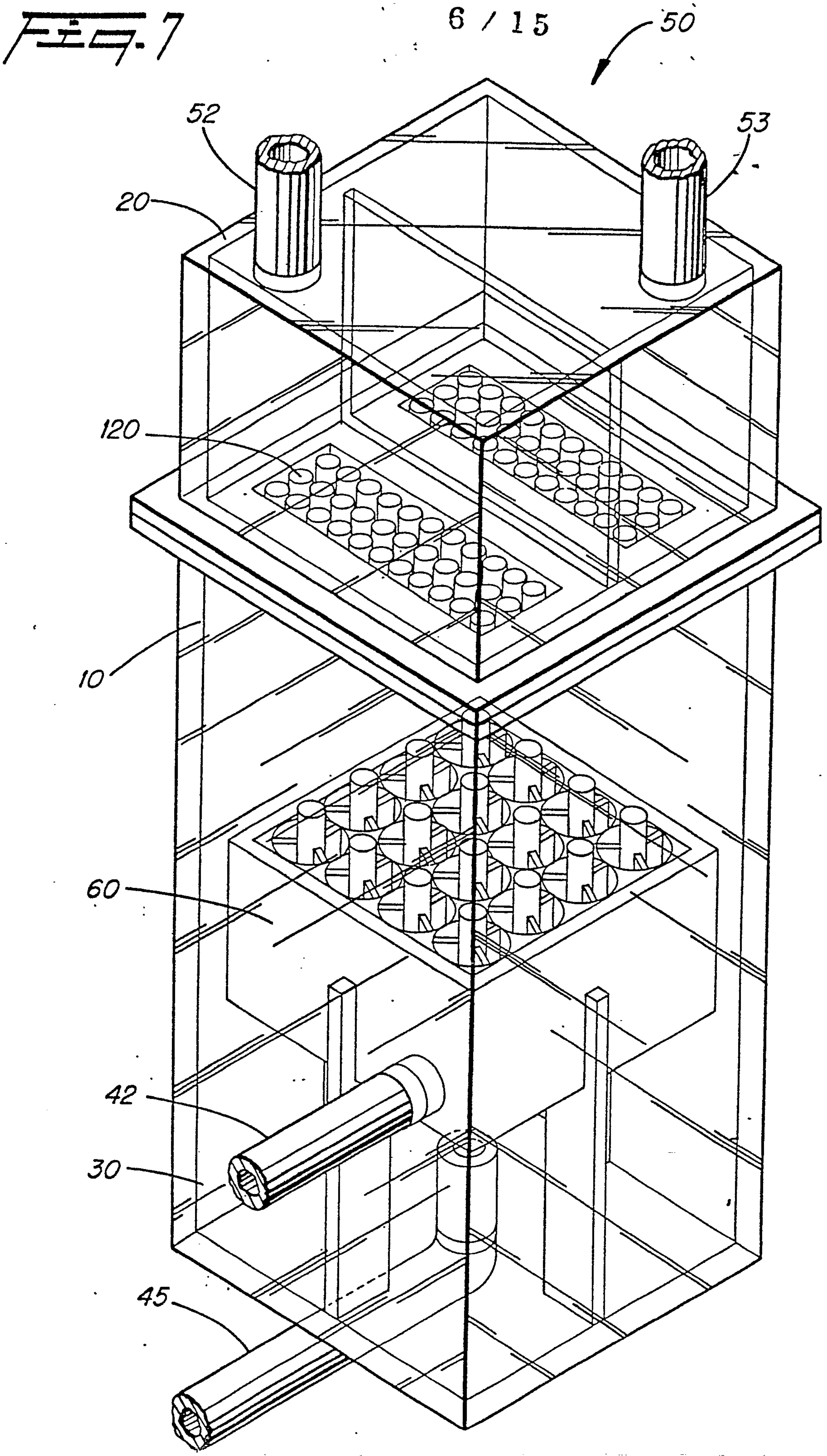

Fig. 6

ELECTRICAL POWER VS. $H_2O$ CONDITION VS. GAS GENERATED

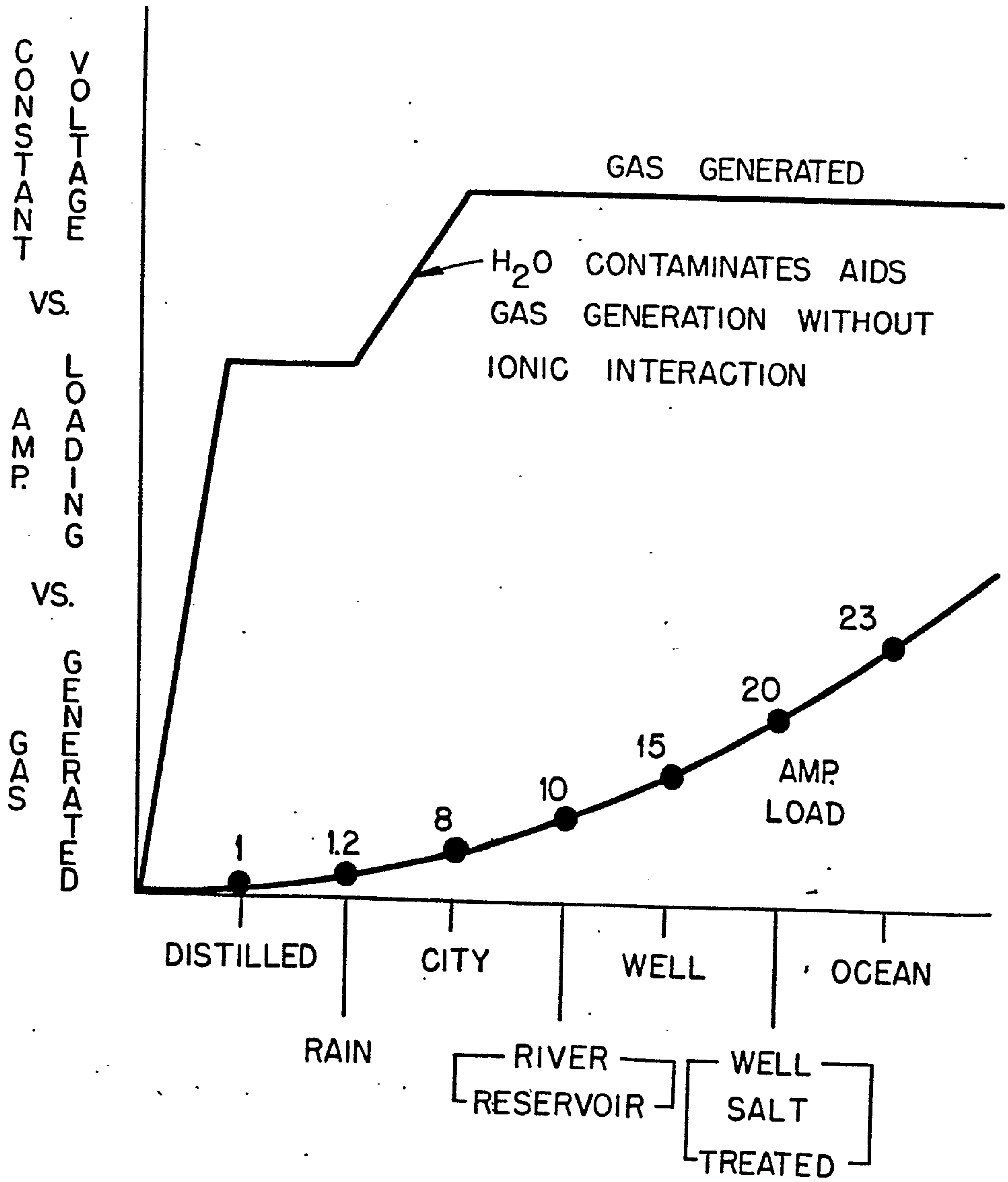


$H_2O$ CONDITION

Fig. 9

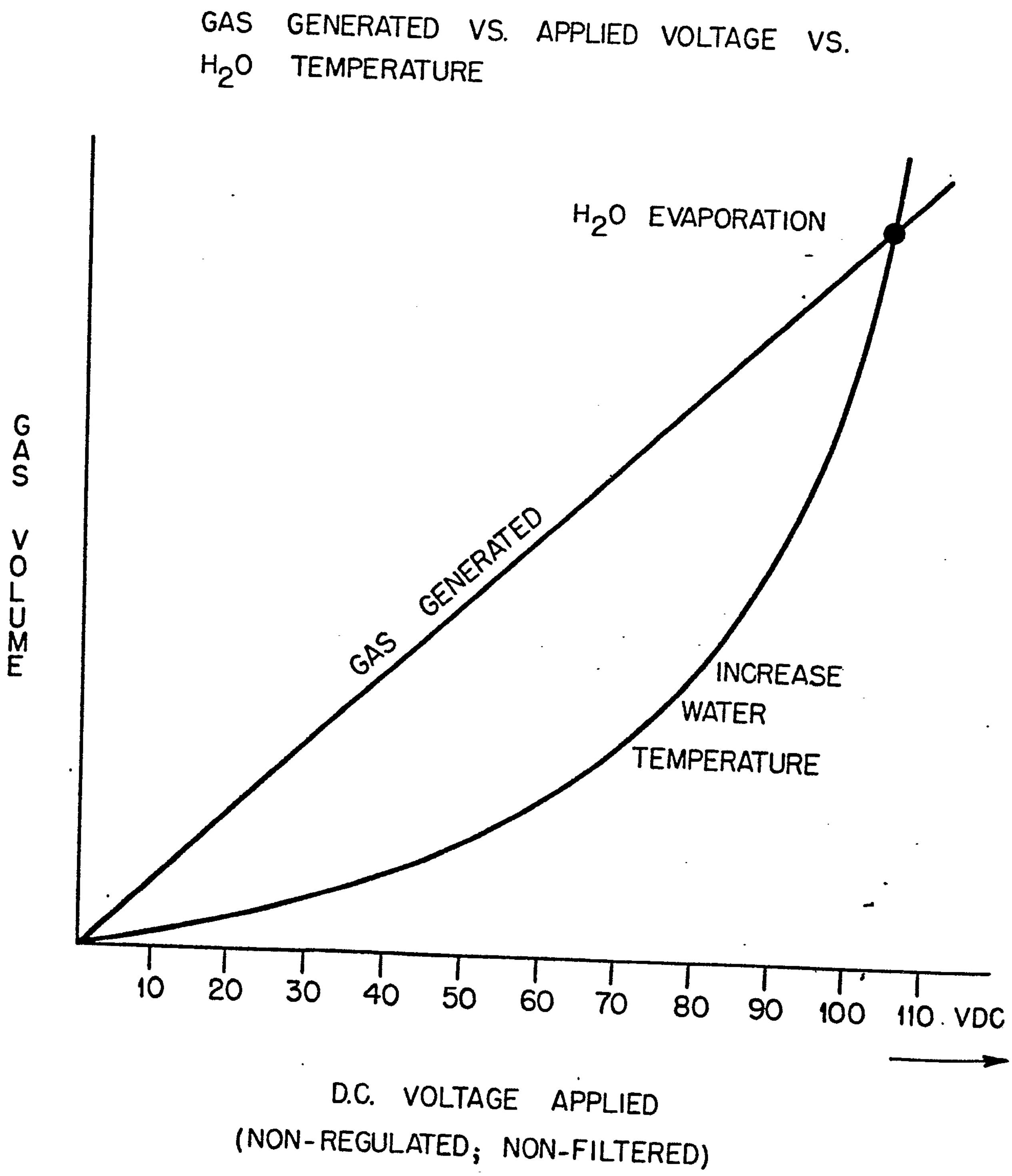
GAS GENERATED VS. APPLIED VOLTAGE VS.
$H_2O$ TEMPERATURE
GAS VOLUME
$H_2O$ EVAPORATION
GAS GENERATED
INCREASE
WATER
TEMPERATURE
10
20
30
40
50
60
70
80
90
100
110 VDC
D.C. VOLTAGE APPLIED
(NON-REGULATED; NON-FILTERED)

FIG. 10

GAS GENERATED VS. EXCITOR TUBE LENGTH

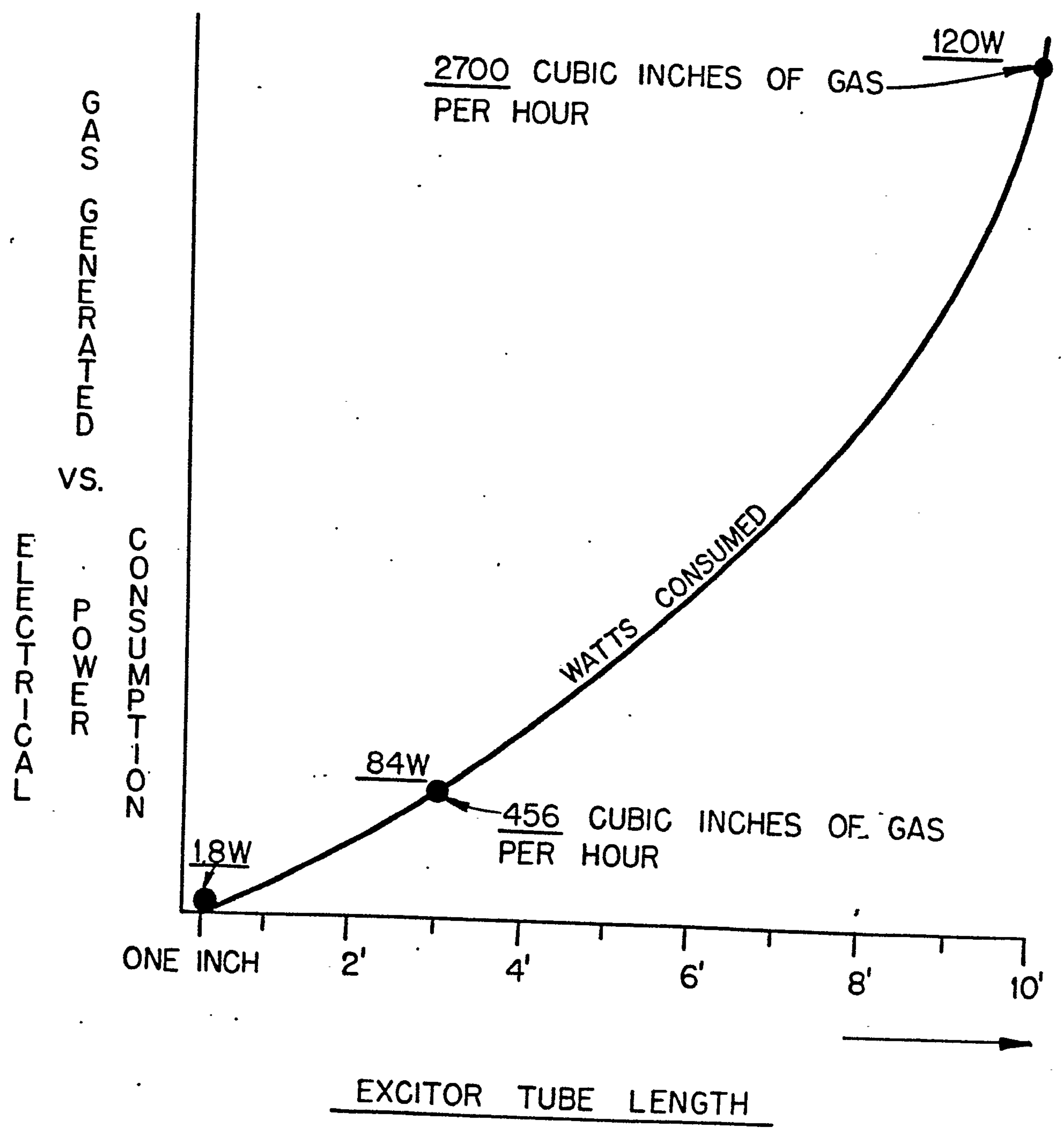

Fig. 11

GAS GENERATED VS. ELECTRICAL POWER VS. NON-CONTAMINATED $H_2O$

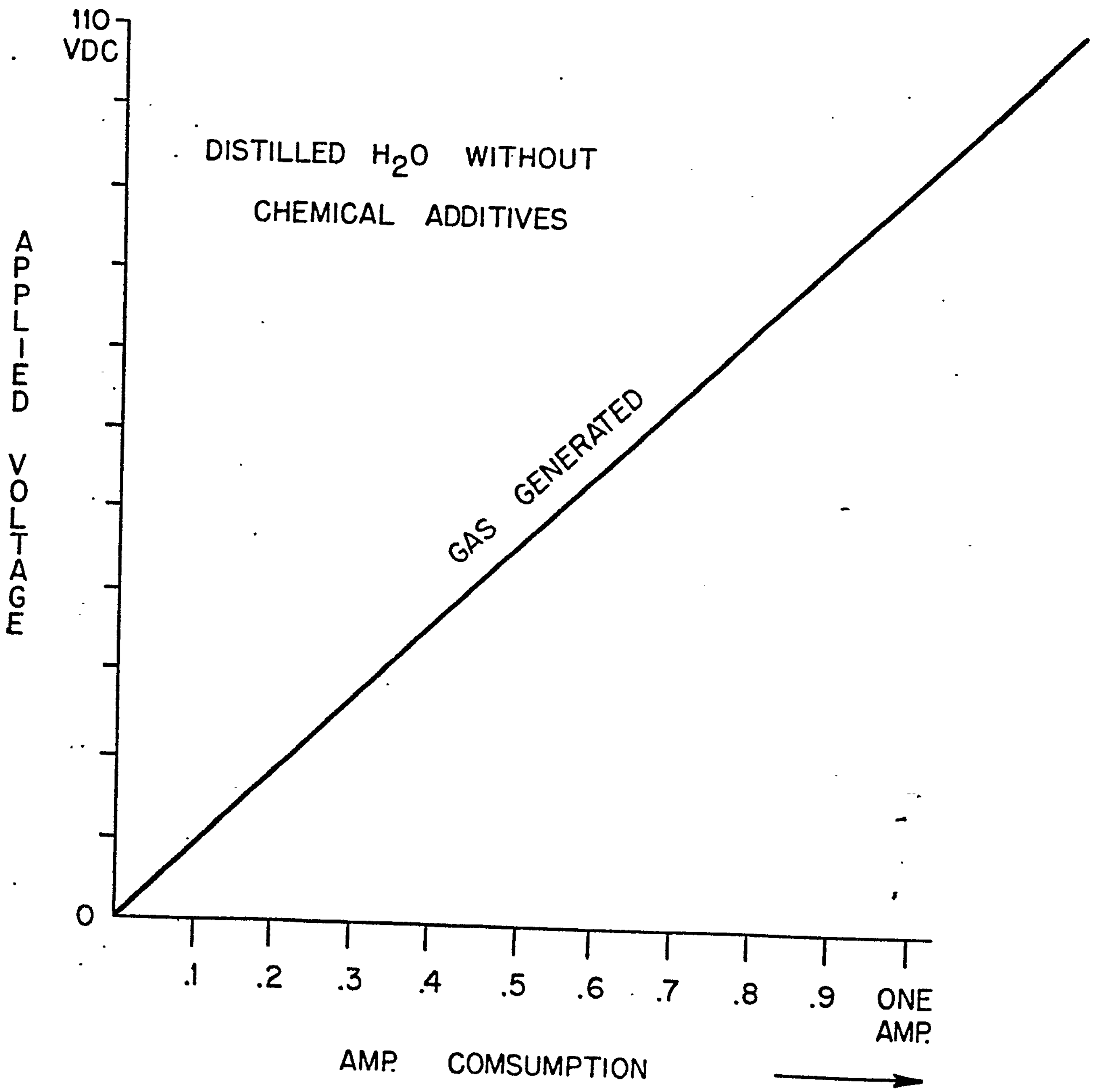

Fig. 12

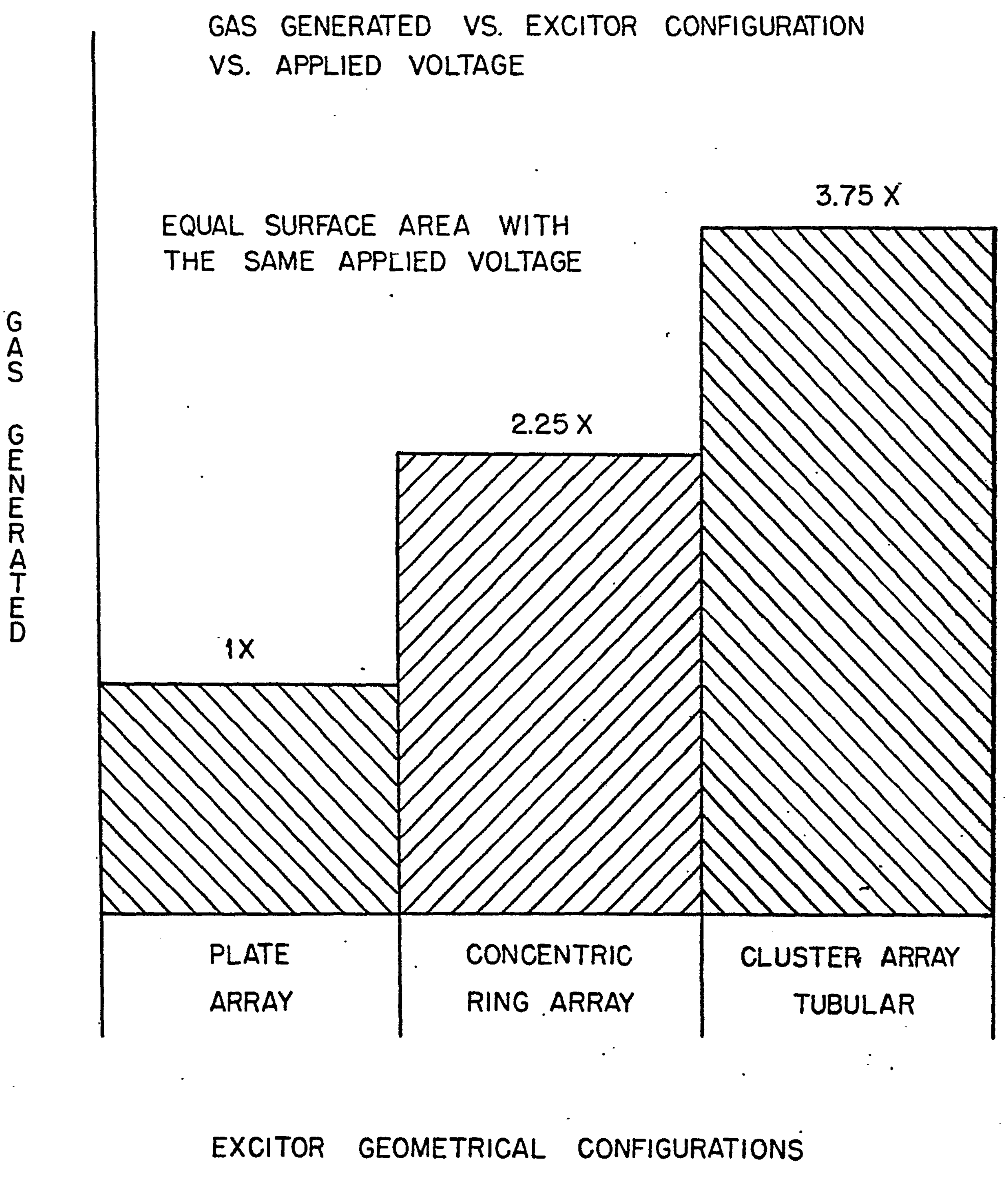
GAS GENERATED VS. EXCITOR CONFIGURATION
VS. APPLIED VOLTAGE
EQUAL SURFACE AREA WITH
THE SAME APPLIED VOLTAGE
GAS GENERATED
1X
2.25 X
3.75 X
PLATE
ARRAY
CONCENTRIC
RING ARRAY
CLUSTER ARRAY
TUBULAR
EXCITOR GEOMETRICAL CONFIGURATIONS

Fig. 13

GAS GENERATED VS. APPLIED VOLTAGE VS. PLATE SEPARATION

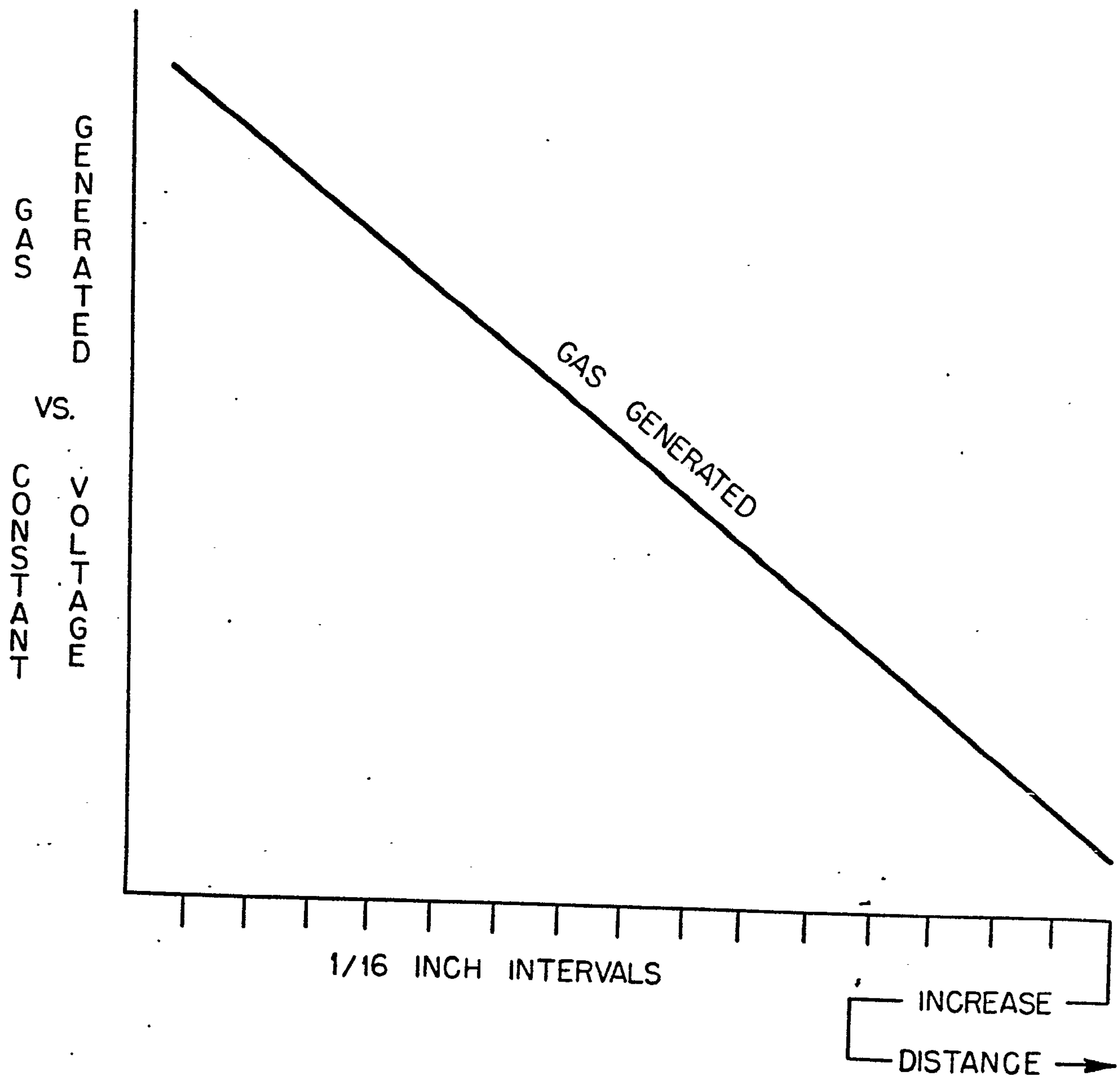


PLATE SEPARATION

Fig. 14

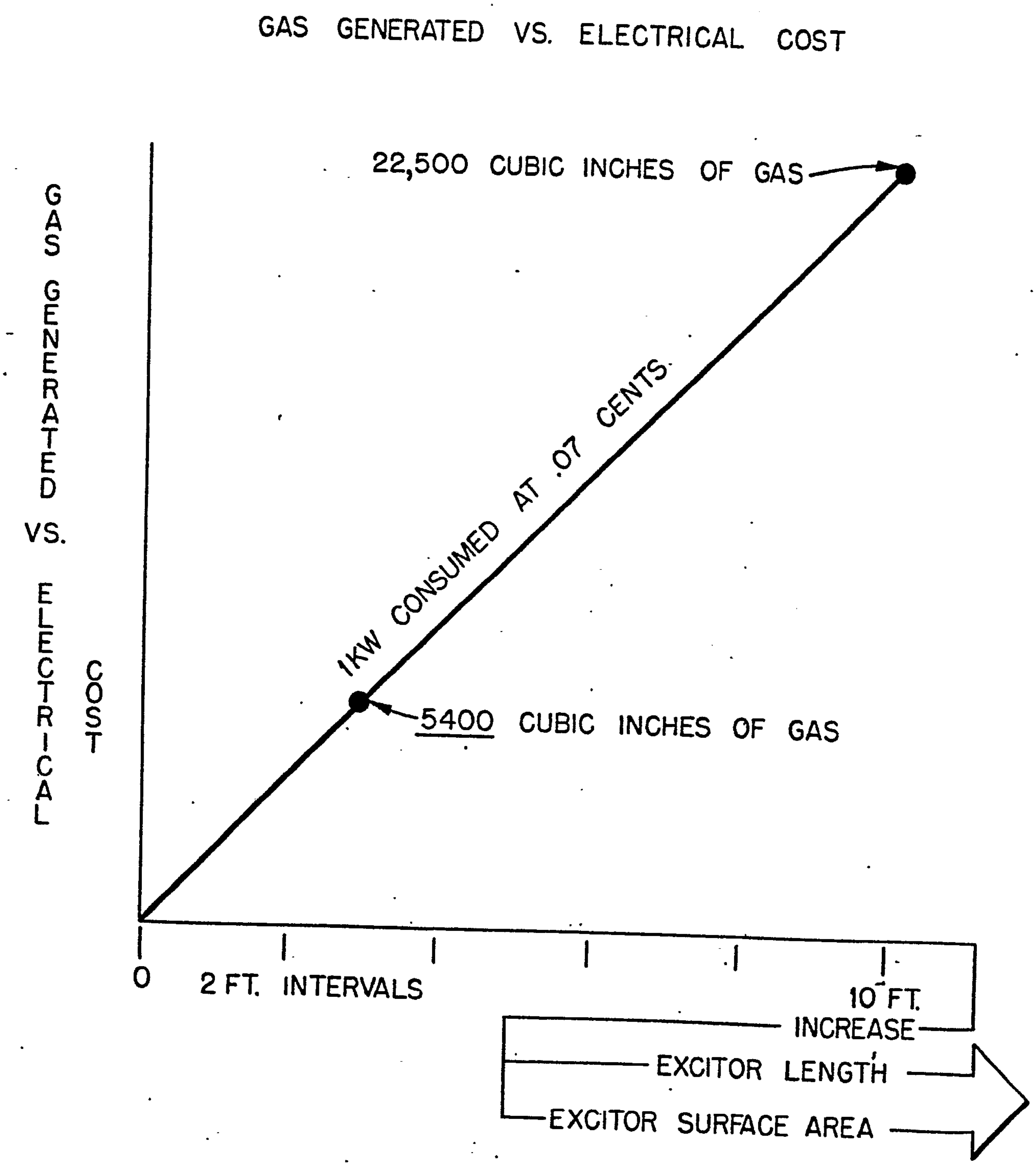


EXCITOR SIZING

Fig. 15 14/15

GAS GENERATED VS. DIFFERENT APPLIED VOLTAGES VS. $H_2O$ CONDITIONS

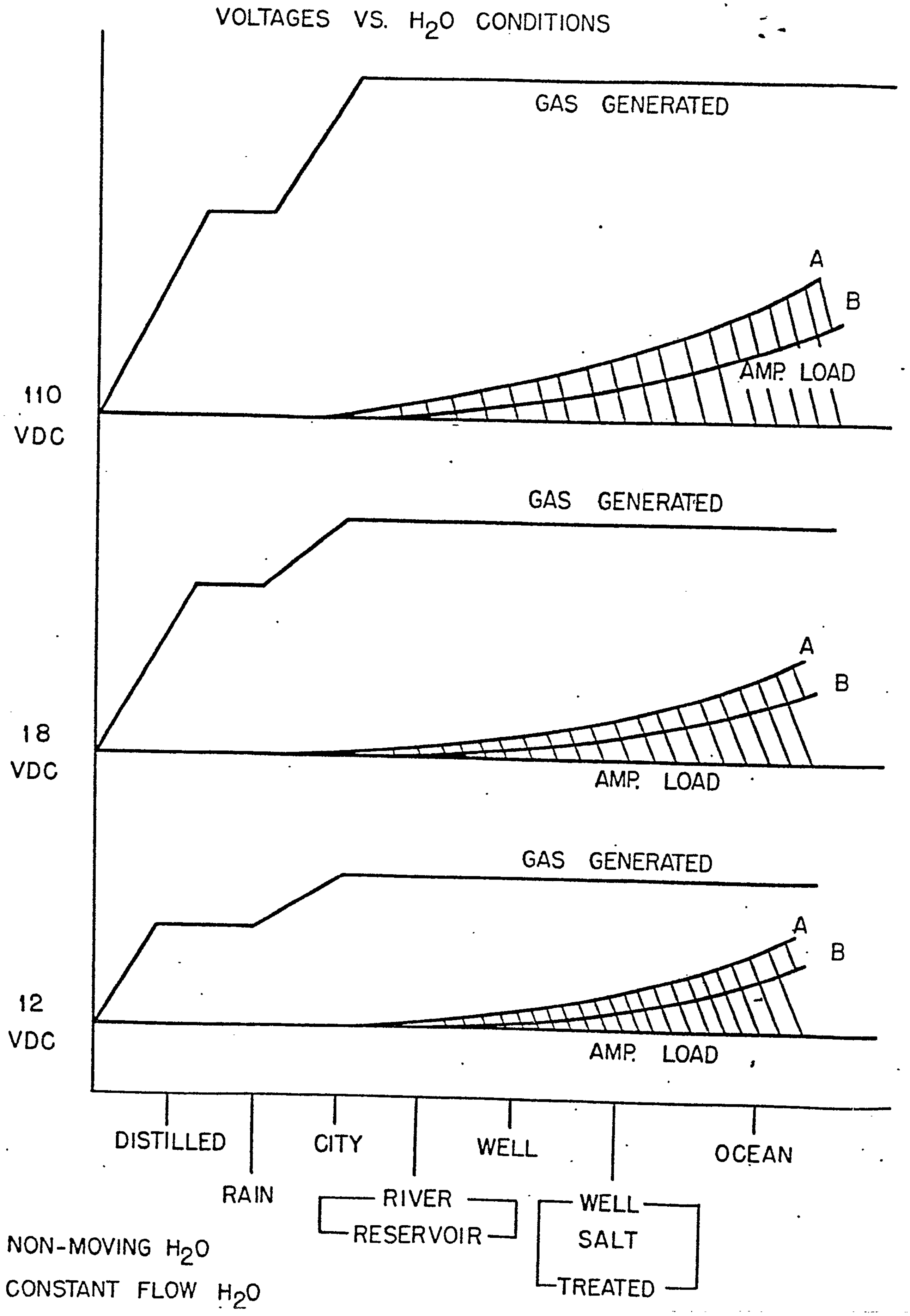

FIG. 16

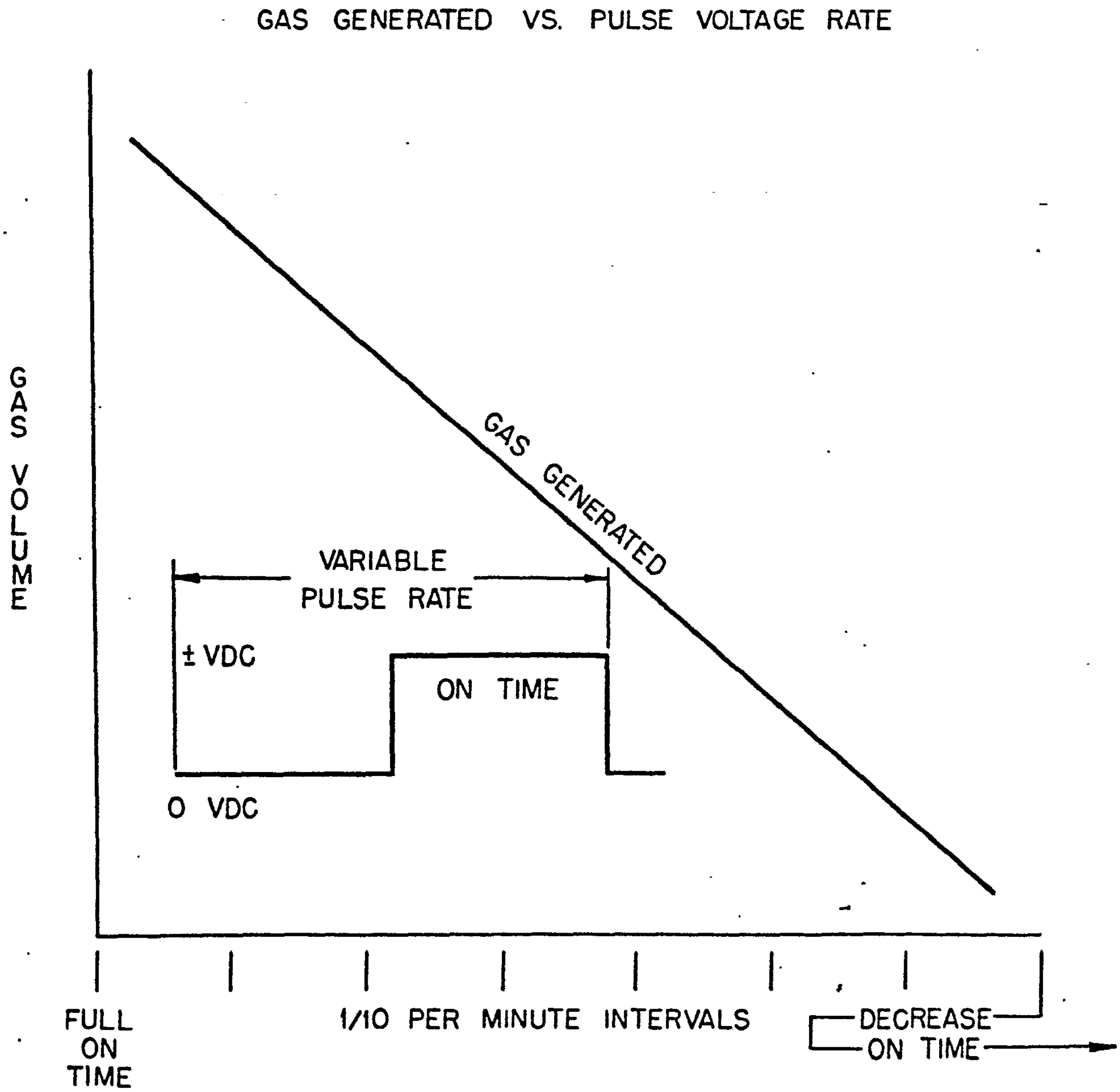
GAS GENERATED VS. PULSE VOLTAGE RATE
GAS VOLUME
GAS GENERATED
VARIABLE PULSE RATE
± VDC
ON TIME
O VDC
FULL ON TIME
1/10 PER MINUTE INTERVALS
DECREASE ON TIME

0111573

European Patent Office

# EUROPEAN SEARCH REPORT

Application number

EP 82 11 1594

| Category | DOCUMENTS CONSIDERED TO BE RELEVANT<br>Citation of document with indication, where appropriate, of relevant passages | Relevant to claim | CLASSIFICATION OF THE APPLICATION (Int. Cl. 3) |
|---|---|---|---|
| A | DE-A-2 852 712 (WOLF)<br>--- | | C 01 B 3/04<br>C 25 B 1/04 |
| A | CHEMICAL ABSTRACTS, vol. 91, no. 20, November 1979, page 534, no. 165635c, Columbus, Ohio, USA & JP - A - 79 89978 (INOUE JAPAX RESEARCH INC.) 17-07-1979<br>----- | | |
| | | | TECHNICAL FIELDS SEARCHED (Int. Cl. 3) |
| | | | C 01 B 3/00<br>C 01 B 3/02<br>C 01 B 3/04<br>C 25 B 1/04<br>C 25 B 1/06 |

The present search report has been drawn up for all claims

| Place of search | Date of completion of the search | Examiner |
|---|---|---|
| THE HAGUE | 09-09-1983 | VAN BELLINGEN I. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, correspondir , document